# EUROPÄISCHE PATENTSCHRIFT

(11) **EP 2 865 557 B1**
(45) Veröffentlichungstag und Bekanntmachung des Hinweises auf die Patenterteilung: **28.08.2019**
(21) Anmeldenummer: 14188633.3
(22) Anmeldetag: 13.10.2014
(51) Int. Cl.: B60L 50/51, B60L 3/00, B60L 15/20, B60L 3/06

(54) **FLURFÖRDERZEUG MIT EINEM FAHRGESCHWINDIGKEITSGEBER**
INDUSTRIAL TRUCK WITH A SPEED SENSOR
CHARIOT DE MANUTENTION ÉQUIPÉ D'UN CAPTEUR DE VITESSE

(30) Priorität: 22.10.2013 DE 102013111638
(43) Veröffentlichungstag der Anmeldung: 29.04.2015
(73) Patentinhaber: Jungheinrich Aktiengesellschaft, 22047 Hamburg (DE)
(72) Erfinder: Ziemann, Jörg, 21149 Hamburg (DE)
(74) Vertreter: Hauck Patentanwaltspartnerschaft mbB

(56) Entgegenhaltungen:
- WO-A1-2007/030045
- WO-A1-2013/147675
- DE-A1-102005 033 702
- DE-A1-102011 016 635
- DE-C- 936 315
- JP-A- 2011 079 451
- US-A1- 2012 226 419
- US-A1- 2012 310 495

## Beschreibung

Die vorliegende Erfindung betrifft ein Flurförderzeug, insbesondere ein Schleppfahrzeug mit einem von einer Bedienperson betätigbaren Fahrgeschwindigkeits geber.

Die Antriebsleistung von Flurförderzeugen und insbesondere von Schleppfahrzeugen wird regelmäßig durch eine Fahrsteuerung begrenzt. Hierzu werden häufig in Versuchsreihen die maximalen Leistungsdaten für das Flurförderzeug ermittelt, bei denen ein sicherer Betrieb ohne thermische Schädigung möglich ist. Als Basis für die Bestimmung der maximalen Leistungsdaten wird in der Regel auf eine Dauerleistungsabgabe des Flurförderzeugs und auf eine kurzzeitige maximale Leistungsabgabe des Fahrzeugs für ungefähr 5 Minuten abgestellt.

Bei Flurförderzeugen und insbesondere bei Schleppfahrzeugen können im vollbeladenen Zustand beim Anfahren Probleme auftreten. Insbesondere beim Anfahren auf der Rampe können die erforderlichen Momente, und hier insbesondere das Losbrechmoment, nicht ohne weiteres aufgebracht werden. Hierdurch kommt es zu ruckhaften und unkontrollierten Anfahrbewegungen.

DE 10 2005 033 702 A1 betrifft ein Betätigungselement für eine Flurförderzeug, das abhängig vom Grad seiner Betätigung kontinuierliche Stellsignale für eine Fahrzeugfunktion erzeugen kann. Bei einem solchen Betätigungselement kann es sich beispielsweise um einen Drehschalter handeln, dessen Umdrehung in ein kontinuierliches Stellsignal umgesetzt wird. Es kann sich bei dem Betätigungselement auch um einen Hebel oder Schalter handeln, der je nach Grad seiner Betätigung ein kontinuierliches Stellsignal erzeugt.

DE 10 2011 016 635 A1 betrifft ein Flurförderzeug für eine mitfahrende Bedienperson, insbesondere Gegengewichtsstapler, mit einem Fahrantrieb, der von einer Bedienperson mittels eines Fahrgebers steuerbar ist, wobei in Abhängigkeit von der Stellung des Fahrgebers in einer Fahrantriebssteuerung ein Sollwert für die Fahrgeschwindigkeit des Flurförderzeugs vorgegeben wird und für den Zusammenhang zwischen der Stellung des Fahrgebers und dem Sollwert für die Fahrgeschwindigkeit in einer Fahrantriebssteuerung mindestens zwei unterschiedliche Kennlinien hinterlegt sind, wobei gemäß mindestens einer ersten Kennlinie bei vollständig betätigtem Fahrgeber der Sollwert für die Fahrgeschwindigkeit der Maximalgeschwindigkeit des Flurförderzeugs entspricht.

US2012/310495 betrifft ein Steuersystem für ein Arbeitsfahrzeug, bei dem eine Arbeitskupplung (lockup clutch) eingesetzt wird. Insgesamt diskutiert das Dokument die Auswirkung des eingekuppelten Fahrzeugs auf den Antrieb und den Kraftstoffverbrauch. Als Antrieb ist hierbei ein Dieselmotor vorgesehen, dessen Arbeitsleistung hydraulisch umgesetzt wird. Hierbei ergeben sich, je nach Fahrzustand, die verschiedensten Abhängigkeiten zwischen Drehzahl und Drehmoment.

JP 2011-079451 beschreibt eine Steuerung für ein hybrid-elektrisches Fahrzeug , das bei geringem Kraftstoffverbrauch ein gutes Beschleunigungsverhalten zeigen soll. Das Dokument beschreibt ferner, dass bei einem herkömmlichen brennkraftmaschinengetriebenen Fahrzeug, der fahrerseitige Kick-Down, als Anforderung einer starken fahrzeugseitigen Beschleunigung, dazu führt, dass das Fahrzeug einen Gang heruntergeschaltet wird und dann beschleunigt.

Der Erfindung liegt die Aufgabe zugrunde, ein Flurförderzeug bereitzustellen, das auch im vollbeladenen Zustand ein kontrolliertes und ruckfreies Anfahren erlaubt. Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Bei dem erfindungsgemäßen Flurförderzeug handelt es sich insbesondere um ein Schleppfahrzeug mit einem von einer Bedienperson betätigbaren Fahrgeschwindigkeitsgeber und einer für einen Fahrantrieb vorgesehenen Fahrsteuerung. An der Fahrsteuerung liegt der Sollwert des Fahrgeschwindigkeitsgebers an und wird in einen Sollwert für ein zu erzeugendes Motormoment umgesetzt. Der Sollwert für das Motormoment ist durch die Fahrsteuerung auf einen Maximalwert begrenzt, der bei einem Dauerbetrieb eine Überhitzung des Motors verhindert. Erfindungsgemäß ist ein Zusatzschalter vorgesehen, bei dessen Betätigung die Fahrsteuerung für einen vorbestimmten Beschleunigungszeitraum einen Sollwert für das Motormoment generiert, der größer als die für den Dauerbetrieb geeigneten Maximalwerte ist. Durch den Zusatzschalter wird also für eine begrenzte Zeit dem Fahrantrieb ein Sollwert vorgegeben, der so hoch ist, dass er für einen Dauerbetrieb des Fahrantriebs nicht geeignet ist. Durch den erhöhten Sollwert während des Beschleunigungszeitraums können Probleme, wie sie beispielsweise beim Anfahren an der Rampe auftreten können, vermieden werden. Durch eine Betätigung des Zusatzschalters kann von dem Fahrantrieb ein Motormoment abgerufen werden, das groß genug ist, um auch bei einem vollbeladenen Fahrzeug bzw. einem Schleppfahrzeug mit vollbeladenen Anhängern ein Losbrechmoment kontrolliert zu überwinden. Indem das erforderliche Losbrechmoment für den Fahrantrieb direkt erzeugt werden kann, wird auch ein Wippen oder ein Aufschaukeln des Schleppfahrzeugs zum Überwinden des Losbrechmoments vermieden.

In einer bevorzugten Weiterentwicklung der Erfindung wird nach einer Betätigung des Zusatzschalters dieser für eine vorbestimmte Ruhezeit gesperrt. Dies bedeutet, dass die Steuerung nach einer einmaligen Betätigung des Zusatzschalters, Signale einer weiteren Betätigung des Zusatzschalters nicht an die Fahrzeugsteuerung weiterleitet, bis die Ruhezeit verstrichen ist. Auf diese Weise wird verhindert, dass durch mehrmaliges Betätigen des Zusatzschalters eine Überhitzung des Fahrantriebs oder der Fahrsteuerung eintritt.

In einer bevorzugten Weiterbildung ist der Beschleunigungszeitraum auf eine Zeitdauer von 10 bis 20 Sekunden, bevorzugt auf 2 bis 10 Sekunden, weiter bevorzugt auf 3 bis 8 Sekunden, begrenzt. Ein solcher Beschleunigungszeitraum, bevorzugt mit einer entsprechenden Ruhezeit danach, kann auch auf Dauer an dem Fahrantrieb oder der Fahrsteuerung keinen Schaden hervorrufen. Auch für den angestrebten Zweck, durch die Betätigung des Zusatzschalters kurzfristig ein erhöhtes Motormoment zur Verfügung zu stellen, ist eine Beschleunigungszeitdauer von weniger als 20 Sekunden ausreichend.

In einer bevorzugten Weiterbildung ist der Fahrgeschwindigkeitsgeber als ein Pedal ausgebildet und der Zusatzschalter wird durch ein Durchdrücken des Pedals über einen Totpunkt hinweg betätigt. Bei dem Zusatzschalter handelt es sich in dieser Ausgestaltung um einen Kick-Down-Schalter, der mit dem Pedal verbunden ist. Wird das Pedal bis zum Ende durchgedrückt, so wird der maximale Sollwert für die Fahrgeschwindigkeit abgerufen. An dieser Stelle liegt ein Totpunkt des Pedals vor. Wird das Pedal weiter durchgetreten, so wird dies erfasst und an die Fahrsteuerung zur Erzeugung des größeren Sollwerts weitergeleitet. Der größere Sollwert kann beispielsweise 30 % bis 40 % über dem maximalen Sollwert bei durchgedrücktem Pedal liegen.

In einer bevorzugten Ausgestaltung generiert die Fahrsteuerung bei einer Betätigung des Zusatzschalters den Sollwert für das Motormoment, abhängig von der Drehzahl. Die Abhängigkeit von der Drehzahl kann hierbei eine proportionale Abhängigkeit sein. Es kann auch sein, dass für bestimmte Drehzahlintervalle eine Erhöhung des Ist-Wertes um einen festen Betrag vorgesehen ist.

In einer bevorzugten Ausgestaltung weist die Fahrsteuerung einen ersten Drehzahlbereich auf, der vom Stand des Fahrzeugs bis zu einem ersten Drehzahlwert reicht, in dem ein erster Sollwert für das Motormoment generiert wird, der größer als der oder die Motormomentsollwerte für Drehzahlen oberhalb des ersten Drehzahlwertes ist. Bei dieser Ausgestaltung gibt es einen ersten Drehzahlbereich, der auch den Stand des Fahrzeugs umfasst, in dem der Sollwert für das Motormoment bei Betätigung des Zusatzschalters am größten ist.

In einer weiteren bevorzugten Ausgestaltung weist die Fahrsteuerung einen zweiten Drehzahlbereich auf, der Drehzahlen oberhalb eines zweiten Drehzahlenwerts umfasst. In diesem zweiten Drehzahlbereich erfolgt keine Erhöhung des Sollwerts bei Betätigung des Zusatzschalters. Der Sollwert behält auch bei Betätigung des Zusatzschalters den für den Dauerbetrieb geeigneten Maximalwert aus der Fahrzeugsteuerung. Hierdurch soll vermieden werden, dass bei einer großen Drehzahl durch Betätigung des Zusatzschalters es zu einer weiteren Beschleunigung des Fahrzeugs kommt.

In einer weiteren bevorzugten Ausgestaltung des erfindungsgemäßen Fahrzeugs ist mindestens ein Temperatursensor vorgesehen, der eine Temperatur des Fahrantriebs und/oder der Fahrsteuerung erfasst und an die Fahrsteuerung anlegt. Die Fahrsteuerung reduziert dann einen Sollwert für das Motormoment, wenn eine vorbestimmte Grenztemperatur überschritten wird. Hierbei kann vorgesehen sein, dass für die Zeitdauer, in der die Grenztemperatur überschritten wird, der Sollwert kontinuierlich reduziert wird. Alternativ oder zusätzlich kann auch vorgesehen sein, dass mehrere Grenztemperaturen definiert sind, bei deren jeweiliger Überschreitung der Sollwert für das Motormoment um bestimmte Beträge reduziert wird. Je nach Ausgestaltung kann die Reduktion des Sollwertes nur den Sollwert des nicht betätigten Zusatzschalters betreffen oder auch den Wert, der bei dem betätigten Zusatzschalter generiert wird.

Die vorliegende Erfindung wird nachfolgend an einem Ausführungsbeispiel näher erläutert. Es zeigen:
- Fig. 1: einen schematischen Aufbau der an der Erfindung beteiligten Komponenten eines Flurförderzeugs mit einem Fahrpedal, einer Fahrsteuerung sowie einem Fahrantrieb,
- Fig. 2: das Motormoments über der Drehzahl aufgetragen und
- Fig. 3: die Abhängigkeit des Motormoments von der Drehzahl bei einem während der Fahrt betätigten Zusatzschalter.

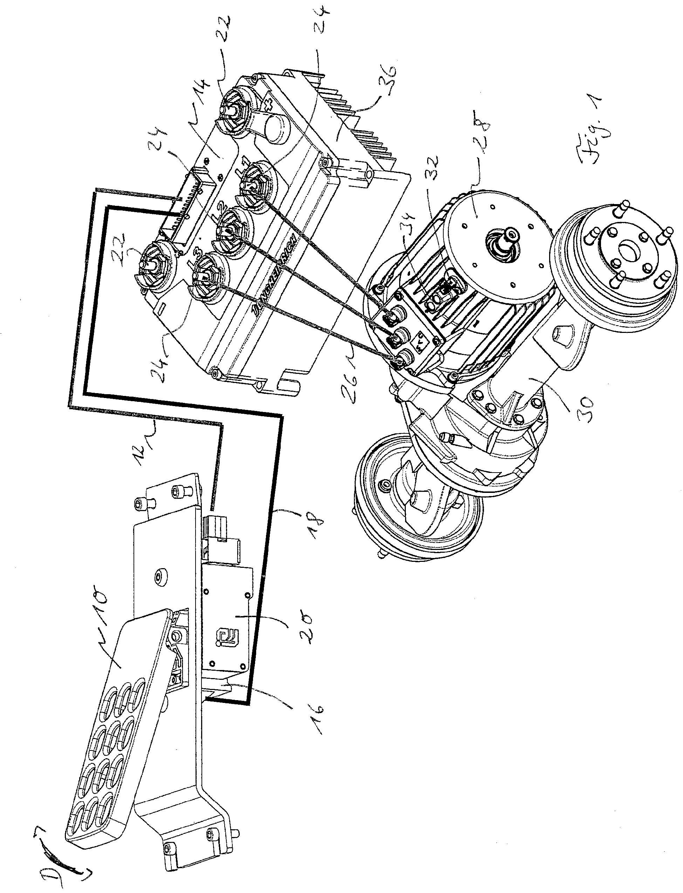

Fig. 1 zeigt ein Fahrpedal 10, das in einer Baugruppe zum Einbau in das Flurförderzeug vorgesehen ist. Das Gaspedal kann in Richtung des Doppelpfeils D bewegt werden, um einen Sollwert 12 an eine Fahrsteuerung 14 anzulegen. Für die Betätigung des Fahrpedals 10 ist ein Totpunkt vorgesehen. Wird das Fahrpedal darüber hinaus durchgetreten, wird ein Zusatzschalter 16 betätigt. Der Zusatzschalter 16 erhöht einen Sollwert 18, der ebenso wie der Sollwert 12 an der Fahrsteuerung 14 anliegt. Die Sollwerte 12 und gegebenenfalls 18 werden von einem Sollwertgeber 20 generiert. Je nach Ausgestaltung kann der Sollwertgeber 20 so ausgebildet sein, dass der Zusatzschalter 16 das einzige anliegende Signal an der Fahrsteuerung 14 bildet oder dass der Sollwert 18 additiv zu dem Sollwert 12 an der Fahrsteuerung 14 anliegt.

Die Fahrtsteuerung 14 besitzt in an sich bekannter Weise zwei Batterieanschlüsse 22 und drei Ausgänge 24, über die ein Motorstrom 26 an einem Motor 28 anliegt. Der Motor 28 geht dann mit seinem Antrieb auf eine Antriebswelle 30. Je nach Ausgestaltung des Flurförderzeugs kann der Motor 28 auch ein einzelnes Antriebsrad antreiben. Der Motor 28 ist in an sich bekannter Weise mit einem Drehzahlsensor 32 und einem Temperatursensor 34 ausgestattet. Der Drehzahlsensor 32 liegt an dem Sollwertgeber 20 für das Fahrpedal oder an der Fahrsteuerung 14 an, um bei der Bestimmung des Sollwertes berücksichtigt zu werden. Der ebenfalls an dem Motor 28 vorgesehene Temperatursensor 34 sendet seine Temperatursignale an die Fahrsteuerung 14, die dann abhängig von überschrittenen Temperaturgrenzwerten den Motorstrom 26 reduziert. Zusätzlich zu den beiden motorseitigen Sensoren 32, 34 kann auch die Fahrsteuerung 14 mit einem Sensor 36 ausgestattet sein. Der Sensor kann als integrierter Temperatursensor eine starke Erhitzung der Fahrsteuerung feststellen und in diesem Fall ebenfalls die Motorströme 26 und damit das Motormoment reduzieren.

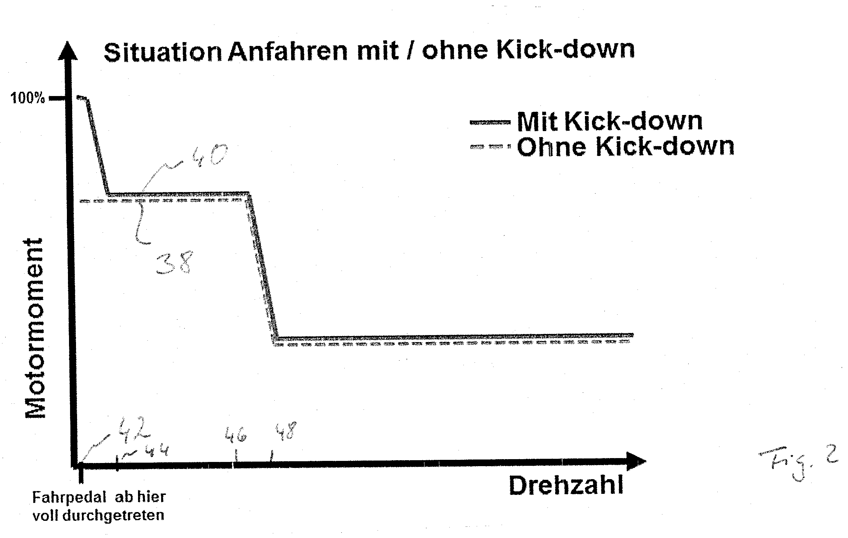

Fig. 2 zeigt die Abhängigkeit des Motormoments von der Drehzahl, wenn bei einer sehr niedrigen Drehzahl oder bei einem stehenden Fahrzeug das Gaspedal soweit durchgedrückt wird, dass der Zusatzschalter 16 als Kick-Down-Schalter anspricht. Bei dem in Fig. 2 dargestellten Diagramm, zeigt die gestrichelt eingezeichnete Linie 38 das Motormoment, abhängig von der Drehzahl, wenn bei der niedrigen Drehzahl 42 keine Betätigung des Zusatzschalters 16 erfolgt. Die durchgezogene Linie 40 zeigt das Motormoment, wenn bei der Drehzahl 42 eine Betätigung erfolgt. Deutlich zu erkennen ist in Fig. 2, dass für den Bereich von niedrigen Drehzahlen bis zu einer zweiten Drehzahl 44 durch die Betätigung des Zusatzschalters ein sehr viel höheres Motormoment vorliegt als bei herkömmlichen Fahrzeugsteuerungen, die keine Kick-Down-Funktion kennen. Der betätigte Zusatzschalter bewirkt kurzzeitig ein sehr hohes Motormoment, das ab einer zweiten Drehzahl44 wieder abnimmt. Bis zu einer dritten Drehzahl 46 liegt dann noch ein Motormoment vor, das dem üblicherweise vorgegebenen Motormoment für den Dauerbetrieb entspricht. Ab der dritten Drehzahl 46 nimmt dieses für den Dauerbetrieb geeignete Motormoment ab, um ab einer vierten Drehzahl 48 auf einem konstanten Niveau zu verbleiben.

Wichtig zum Verständnis der Fig. 2 ist, dass das abfallende Motormoment der Kurve 40 durch die zeitliche Begrenzung des erhöhten Motorsollwerts entsteht. Ist die Zeitdauer von beispielsweise 5 Sekunden für das auf 100 % erhöhte Motormoment verstrichen, fällt die Kurve 40 auf die Drehzahl 38 ab. Dies passiert ungefähr bei der zweiten Drehzahl 44, allerdings hängt die zweite Drehzahl 44 stark von der Beladung und einer etwaigen Neigung des Untergrundes für das Fahrzeug ab. Ist das Fahrzeug stark beladen, so bewirkt das auf 100 % erhöhte Motormoment eine niedrigere Drehzahlerhöhung und die zweite Drehzahl 44 ist kleiner als bei einem weniger stark beladenen Fahrzeug. Ebenso verhält es sich, bei einem Fahrzeug, das auf einer Rampe gegenüber einem horizontalen Untergrund steht.

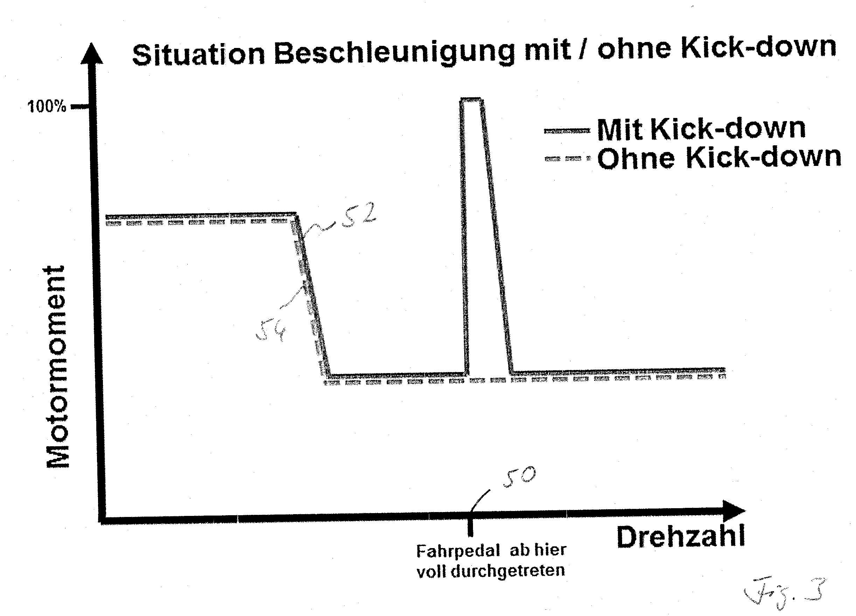

Fig. 3 zeigt in ähnlicher Weise die Wirkung des Zusatzschalters 16, allerdings wenn dieser bei einer Drehzahl 50 betätigt wird. Auch in Fig. 3 verläuft die gestrichelte Linie 54 in Abhängigkeit des Motormoments von der Drehzahl wie bei einem herkömmlichen Fahrzeug. Die durchgezogene Linie 52 zeigt das Motormoment, abhängig von der Drehzahl bei der erfindungsgemäßen Ausgestaltung. Deutlich zu sehen ist, dass, wenn bei der Drehzahl 50 der Zusatzschalter betätigt wird, das Motormoment kurzzeitig auf 100 % steigt, um eine vorbestimmte Zeitdauer auf diesem Wert zu verbleiben. Ist die vorbestimmte Zeitdauer abgelaufen, geht das Motormoment auf den herkömmlichen Wert der Kurve 54 zurück. Mit der Zeitdauer ist dabei die Drehzahl gestiegen.

## Patentansprüche

1. Flurförderzeug, insbesondere Schleppfahrzeug mit einem von einer Bedienperson betätigbaren Fahrgeschwindigkeitsgeber (10) und einer für einen Fahrantrieb vorgesehenen Fahrsteuerung (14), die einen anliegenden Sollwert (12) des Fahrgeschwindigkeitsgebers (10) in einen Sollwert für ein zu erzeugendes Motormoment umsetzt, wobei der Sollwert für das Motormoment, abhängig von einer Drehzahl des Motors, auf einen Maximalwert begrenzt ist, der in einem Dauerbetrieb eine Überhitzung des Motors verhindert,
**dadurch gekennzeichnet, dass**
ein Zusatzschalter (16) vorgesehen ist, bei dessen Betätigung die Fahrsteuerung (14) für einen vorbestimmten Beschleunigungszeitraum einen Sollwert (18) für das Motormoment generiert, der größer als die für den Dauerbetrieb geeigneten Maximalwerte ist.

2. Flurförderzeug nach Anspruch 1, **dadurch gekennzeichnet, dass** nach einer Betätigung des Zusatzschalters (16) dieser für eine vorbestimmte Ruhezeit gesperrt ist.

3. Flurförderzeug nach Anspruch 1 oder 2, **dadurch gekennzeichnet, dass** eine Beschleunigungszeitdauer von 1 bis 20 Sekunden, bevorzugt 2 bis 10 Sekunden, weiter bevorzugt 3 bis 8 Sekunden beträgt.

4. Flurförderzeug nach einem der Ansprüche 1 bis 3, **dadurch gekennzeichnet, dass** der Fahrgeschwindigkeitsgeber (10) als ein Pedal ausgebildet ist und der Zusatzschalter durch ein Durchdrücken des Pedals über einen Totpunkt hinaus betätigt wird.

5. Flurförderzeug nach einem der Ansprüche 1 bis 4, **dadurch gekennzeichnet, dass** die Fahrsteuerung (14) bei einer Betätigung des Zusatzschalters (16) den Sollwert für das Motormoment, abhängig von der Drehzahl, generiert.

6. Flurförderzeug nach Anspruch 5, **dadurch gekennzeichnet, dass** die Fahrsteuerung (14) in einem ersten Drehzahlbereich, der von dem Stand des Fahrzeugs bis zu einem ersten Drehzahlwert (42) reicht, einen ersten Sollwert für das Motormoment generiert, der größer als der oder die Motormomentsollwerte für die Drehzahlen oberhalb des ersten Drehzahlwertes ist.

7. Flurförderzeug nach Anspruch 6, **dadurch gekennzeichnet, dass** die Fahrsteuerung für einen zweiten Drehzahlbereich, der Drehzahlen größer als ein zweiter Drehzahlwert (44) umfasst, keine Erhöhung des Sollwerts auf einen nicht für den Dauerbetrieb geeigneten Maximalwert vorsieht.

8. Flurförderzeug nach einem der Ansprüche 1 bis 7, **dadurch gekennzeichnet, dass** mindestens ein Temperatursensor vorgesehen ist, der eine Temperatur des Fahrantriebs und/oder der Fahrsteuerung (14) erfasst und an die Fahrsteuerung (14) anlegt, wobei die Fahrsteuerung einen Sollwert für das Motormoment reduziert, wenn eine vorbestimmte Grenztemperatur überschritten wird.

## Claims

1. An industrial truck, in particular a towing vehicle comprising a travel speed input means (10) that can be actuated by an operator and a travel controller (14) that is provided for a travel drive and that converts a current target value (12) of the travel speed input means (10) into a target value for an engine torque to be generated, the target value for the engine torque, depending on a rotational speed of the engine, being limited to a maximum value that prevents overheating of the engine during continuous operation,
**characterized in that**
an additional switch (16) is provided, the actuation of which causes the travel controller (14) to generate a target value (18) for the engine torque for a predetermined period of acceleration, which target value is greater than the maximum values suitable for continuous operation.

2. The industrial truck according to claim 1, **characterized in that**, after actuation of the additional switch (16), said additional switch is locked for a predetermined rest period.

3. The industrial truck according to claim 1 or 2, **characterized in that** a period of acceleration lasts from 1 to 20 seconds, preferably 2 to 10 seconds, more preferably 3 to 8 seconds.

4. The industrial truck according to any of claims 1 to 3, **characterized in that** the travel speed input means (10) is designed as a pedal and the additional switch is actuated by pushing the pedal beyond a dead point.

5. The industrial truck according to any of claims 1 to 4, **characterized in that** the travel controller (14) generates the target value for the engine torque, depending on the rotational speed, when the additional switch (16) is actuated.

6. The industrial truck according to claim 5, **characterized in that** the travel controller (14) generates a first target value for the engine torque in a first rotational speed range that extends from a stationary state of the vehicle to a first rotational speed value (42), which first target value is greater than the engine torque target value(s) for the rotational speeds above the first rotational speed value.

7. The industrial truck according to claim 6, **characterized in that** the travel controller does not provide for an increase of the target value to a maximum value unsuitable for continuous operation for a second rotational speed range, which comprises rotational speeds greater than a second rotational speed value (44).

8. The industrial truck according to any of claims 1 to 7, **characterized in that** at least one temperature sensor is provided which detects a temperature of the travel drive and/or travel controller (14) and communicates said temperature to the travel controller (14), the travel controller reducing a target value for the engine torque if a predetermined threshold temperature is exceeded.

## Revendications

1. Chariot de manutention, notamment véhicule tracteur équipé d'un capteur de vitesse (10) actionnable par un opérateur et d'une commande de conduite (14) prévue pour un entraînement, qui convertit une valeur de consigne active (12) du capteur de vitesse (10) en une valeur de consigne destinée à un couple moteur à développer, dans lequel la valeur de consigne du couple moteur est limitée en fonction de la vitesse du moteur à une valeur maximale, qui empêche une surchauffe du moteur en fonctionnement continu,
**caractérisé en ce**
**qu'**un commutateur supplémentaire (16) est prévu, suite à l'actionnement duquel la commande de conduite (14) génère durant une période d'accélération prédéterminée une valeur de consigne (18) du couple moteur, qui est supérieure aux valeurs maximales appropriées au fonctionnement continu.

2. Chariot de manutention selon la revendication 1, **caractérisé en ce qu'**après un actionnement du commutateur supplémentaire (16), celui-ci est bloqué pendant un temps de repos prédéterminé.

3. Chariot de manutention selon la revendication 1 ou 2, **caractérisé en ce qu'**une durée d'accélération de 1 à 20 secondes s'élève de préférence à une valeur comprise entre 2 et 10 secondes, encore mieux entre 3 et 8 secondes.

4. Chariot de manutention selon l'une des revendications 1 à 3, **caractérisé en ce que** le capteur de vitesse (10) est conçu sous la forme d'une pédale et que le commutateur supplémentaire est actionné au-delà d'un point mort moyennant l'enfoncement total de la pédale.

5. Chariot de manutention selon l'une des revendications 1 à 4, **caractérisé en ce que** la commande de conduite (14) génère la valeur de consigne du couple moteur selon la vitesse du moteur en cas d'actionnement du commutateur supplémentaire (16).

6. Chariot de manutention selon la revendication 5, **caractérisé en ce que** la commande de conduite (14) génère dans une première plage de vitesses s'étendant du départ arrêté du véhicule jusqu'à un premier régime moteur (42) une première valeur de consigne du couple moteur, qui est supérieure à la ou les valeurs de consigne du couple moteur applicables aux vitesses se situant au-dessus du premier régime moteur.

7. Chariot de manutention selon la revendication 6, **caractérisé en ce que** la commande de conduite ne prévoit aucune augmentation de la valeur de consigne jusqu'à une valeur maximale non appropriée au fonctionnement continu pour une seconde plage de vitesses, qui comprend des vitesses supérieures à un second régime moteur (44).

8. Chariot de manutention selon l'une des revendications 1 à 7, **caractérisé en ce qu'**au moins un capteur de température est prévu, qui détecte une température de l'entraînement et/ou de la commande de conduite (14) et communique cette température à la commande de conduite (14), dans lequel la commande de conduite réduit une valeur de consigne du couple moteur, lorsqu'une température limite prédéterminée est dépassée.
